# EUROPEAN PATENT SPECIFICATION

(11) **EP 3 753 623 B1**
(45) Date of publication and mention of the grant of the patent: **20.12.2023**
(21) Application number: 20180631.2
(22) Date of filing: 17.06.2020
(51) Int. Cl.: B01D 46/00, B01D 46/04, B01D 46/42, F17C 13/04

(54) **VALVE DEVICE FOR CLEANING INDUSTRIAL FILTERS**
VENTILVORRICHTUNG ZUR REINIGUNG INDUSTRIELLER FILTER
DISPOSITIF DE SOUPAPE POUR NETTOYER DES FILTRES INDUSTRIELS

(30) Priority: 19.06.2019 IT 201900009477
(43) Date of publication of application: 23.12.2020
(73) Proprietor: Trimec S.r.l., 20090 Cesano Boscone (MI) (IT)
(72) Inventor: ZANONI, Massimiliano, 20090 Cesano Boscone (MI) (IT)
(74) Representative: Grana, Daniele

(56) References cited:
- EP-A1- 1 493 480
- EP-A1- 2 436 966
- WO-A1-01/29465
- WO-A1-2010/028813
- DE-U1- 8 408 258
- US-A- 5 524 903

## Description

The present invention relates to a valve device for cleaning industrial filters.

In the field of industrial air purification filters the use is known of filtering elements (or commonly called filters) able to retain powders from the sucked air. The filtering elements consist of so-called "sleeves" or so-called "cartridges". The cartridges generally have a rigid and suitably shaped filtering material while the sleeves are usually provided with braided wires, the material of which has such a permeability as to allow the flow of gas and retain powders.

The material retained by the filtering elements accumulates thereon and modifies the permeability of the fabric; in order to eliminate the accumulation of powders on the filter, tools are fitted which are adapted to clean said filtering elements. The cleaning tools normally use the injection of compressed air inside the filtering elements in the opposite direction to the normal air absorption flow; this injection of air allows shaking the filtering elements thus causing the detachment of the powders deposited thereon.

The cleaning tools comprise valve devices (or otherwise known as "valves") that allow the regulation of air injection and are connected to a compressed air storage tank.

The valve devices comprise a main body provided with an air inlet port, an air outlet port and a diaphragm there between. The diaphragm is movable between a closure position, wherein it prevents the flow of air, and an opening position that allows air to flow through. The air inlet port is connected to the compressed air tank while the air outlet port is connected to a dispensing tube, called a "lance", which delivers the compressed air to the filtering elements by means of nozzles. Currently, these valves are mounted directly in the compressed air tank; the assembly process first involves drilling holes in the tank, at a distance from each other depending on the pitch of the valve, after which a valve is mounted on each hole.

In the assembly process the "lance" goes through the tank from side to side, parallel to the transverse axis of the tank. On the "lance", outside the tube and on the opposite side to the main body of the valve, a ring nut is welded and a saddle is inserted between the tank and the ring nut. During the assembly process, the "lance" is screwed onto the main body of the valve by pushing the saddle against the external surface of the tank via the ring nut.

Inside the tank, at each valve, a rod is welded arranged parallel to the "lance"; the purpose of this rod is to limit the deformation of the tank which is generally caused by the excessive screwing of the lance into the main body of the valve. In fact, since there are no constraints and/or end stops between the lance and the valve, the operator in charge of the assembly is not able to know when he has to stop screwing the lance.

The presence of the rod, although it solves the problems of deformation of the tank, can have several drawbacks: since, during the assembly phase, the rods are welded to the tank, the welding can create residues that may cause problems for the correct operation of the valve. In addition, several valves are mounted in the same tank and the relevant rod is welded at each valve. The welding of several rods for each valve involves the use of high quantities of material and a consequent increase in the labor required, which can lead to an increase in production times, in case errors or incorrect welding of the rods occur during the welding of the rods. The rod assembly process is thus relatively expensive with quite long production times. Document WO2012/028813 discloses a valve device according to the preamble of claim 1.

The main aim of the present invention is to devise a valve device that can be connected to a tank which allows avoiding the presence of rods and, at the same time, limits possible deformations of the tank.

The present invention therefore relates to a valve device according to claim 1 provided with an improved lance having structural and functional characteristics such as to meet the aforementioned requirements and at the same time to overcome the aforementioned drawbacks with reference to the prior art.

Further characteristics and advantages of the valve device according to the present invention will result from the description below of a preferred example of its embodiment, given as an indication and not limited to, with reference to the attached figures, in which:
- Figure 1 shows a schematic front view of an industrial plant of part of a carpentry inside which an industrial filter controlled by a valve device is installed (highlighted by the zoom at the top left) according to the present invention,
- Figure 2 shows a perspective view of the valve device inside a tank in cross-section according to the present invention,
- Figure 3 shows a perspective view of the tank only in Figure 2,
- Figure 4 shows a top view of the valve device only in Figure 2,
- Figure 5 shows an exploded side view of the valve device in Figure 2,
- Figure 6 shows a perspective view, from above, of the saddle only of the valve device in Figure 2,
- Figure 7 shows a perspective view, from above, of the head portion of the valve device in Figure 2,
- Figure 8 shows a perspective view, from below, of the end portion of the valve device in Figure 2.

With reference to the examples in the attached figures, a valve device 1, or otherwise called a valve, is shown which is mounted in a tank S for compressed air containment.

The valve device 1 is normally used in industrial plants where filters are required to intercept hazardous materials such as powders or particulate matter.

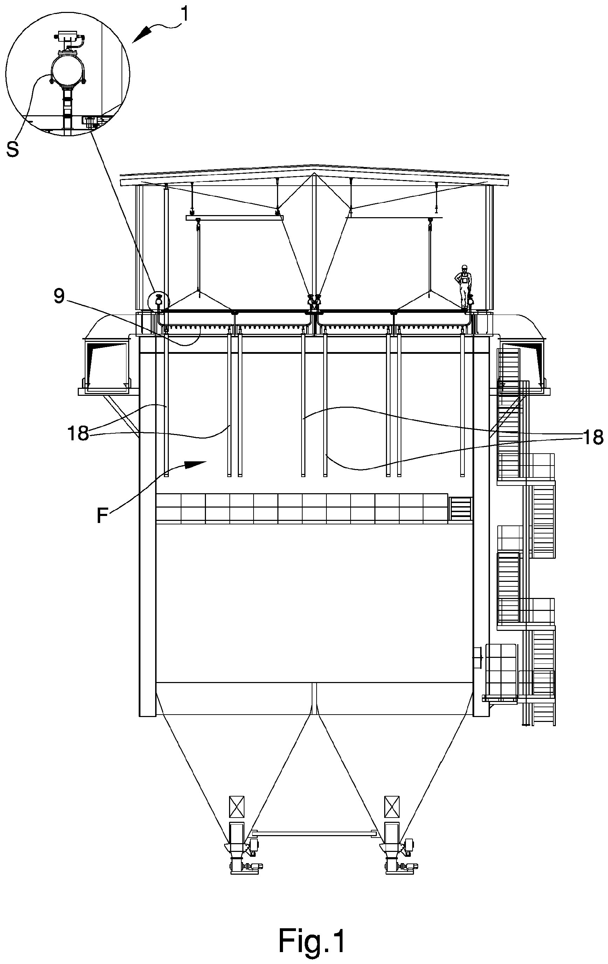

In the example shown in Figure 1, the valve 1 is connected to a filter F by means of the tank S intended to convey compressed air to the filter itself.

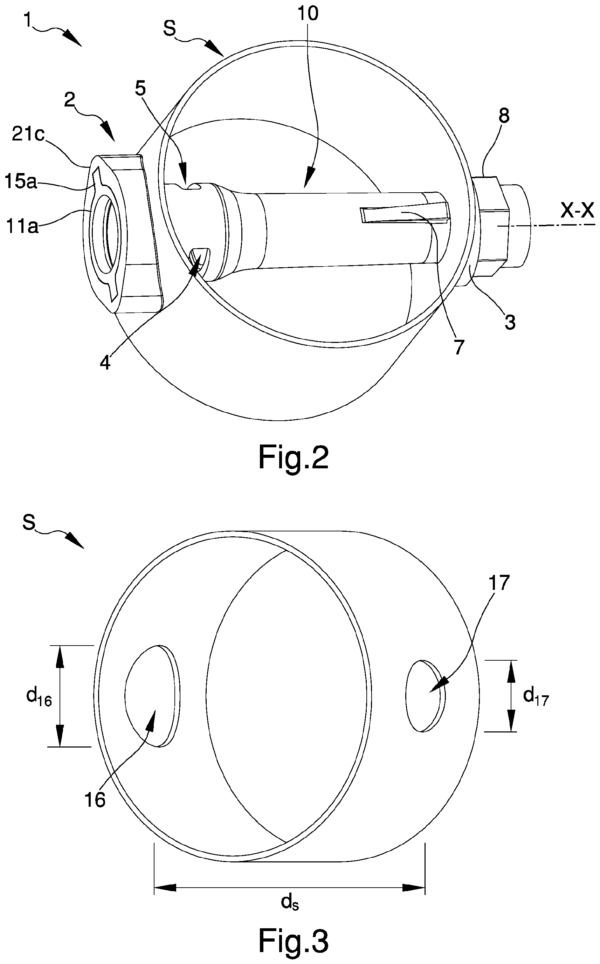

Between the filter F and the tank S there is a blower pipe 9 (or also called a ramp) in fluidic communication with the filter F that joins the valve 1 to the filter itself to which are attached one or more sleeves 18 that intercept the powders. As shown in the examples in Figures 2, 4, 5, the valve 1 extends mainly along its longitudinal axis X-X by a predetermined length L₁ depending on the size of the tank S and comprises a main body 10.

Preferably, the main body 10 is made of a single body piece. In particular, the valve 1 is monolithic and consists of a single body, preferably made of die-cast aluminum or steel.

In the main body 10 of the valve 1 there are a head portion 11, a central portion 12 and an end portion 13. The central portion 12 is comprised between the head portion 11 and the end portion 13 and extended by a predetermined length L₂. As a whole, the main body 10 is normally called a dispensing tube or "lance". In particular, the lance 10 has a substantially cylindrical shape and is hollow inside so that compressed air flows to and from the tank S.

The head portion 11 of the lance 10 then extends between a final extremity 11a and a connecting member 11b.

The valve device 1 also comprises a first saddle 2 and a second saddle 3 adapted to connect to the head portion 11 and to the end portion 13 of the lance 10 respectively, wherein the second saddle 3 is locked by a ring nut 8. The ring nut 8 is adapted to be screwed to the end portion 13 of the lance 10 by means of a common thread not shown in the figures.

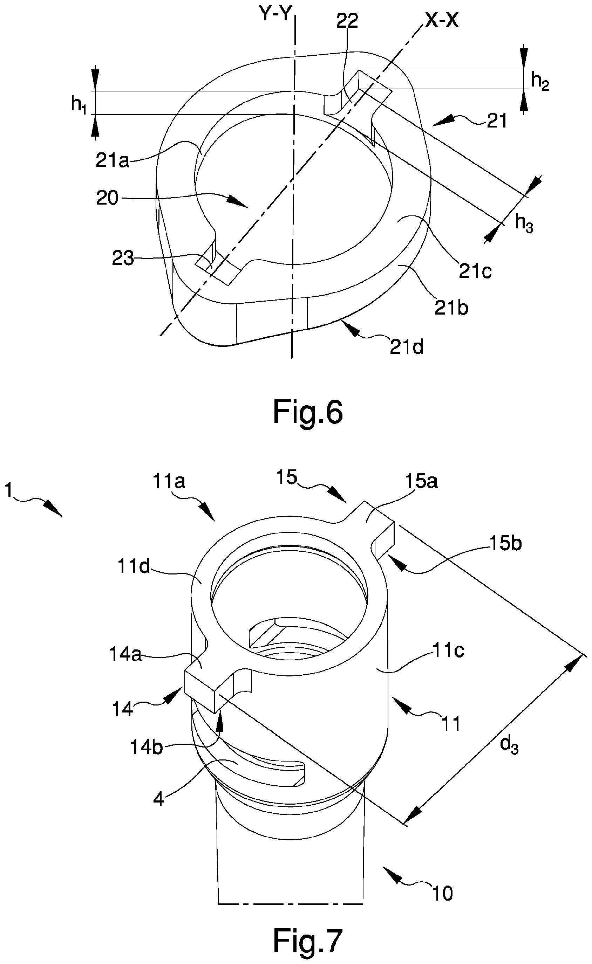

As shown in the example in Figure 6, the first saddle 2 is provided with a through hole 20 intended to receive, by shape coupling, the final extremity 11a of the main body 10. The saddle 2 has a main body 21 substantially ring-shaped, preferably oval-shaped, with a thickness h₁ of about 15 mm extending between an upper surface 21c, substantially flat, and a lower surface 21d. In addition, the lower surface 21d of the saddle 2 also has a substantially curved pattern so as to fit the external surface of the tank S. In addition, the main body 21 has a circular internal surface 21a and a substantially elliptical external surface 21b. Substantially, as a whole, the main body 21 has a substantially elliptical external shape where, internally and along the major axis, two diametrically opposite cavities 22,23 are obtained which act as seats for the respective insertion fins 14,15, the latter being arranged on the head portion 11 of the lance 10, as described in detail later in the present description.

In particular, each cavity 22,23 on the saddle 2 is obtained by removing a portion of material from the upper surface 21c and from the internal surface 21a, respectively, by sections of predetermined length h₂ and h₃ that vary depending on the size of the head portion 11 of the valve 1. This way, the cavities 22,23 are directed towards the hole 20 of the main body 21.

Preferably, the seats 22,23 of the saddle 2 have a substantially parallelepiped shape.

Preferably, the height h₂ of the seats 22,23 is less than the height h₁ of the internal surface 21a of the saddle 2. Additionally, the length h₃ of the seats 22,23 is less than the difference between the radius of the internal surface 21a and the radius of the external surface 21b along the axis X-X.

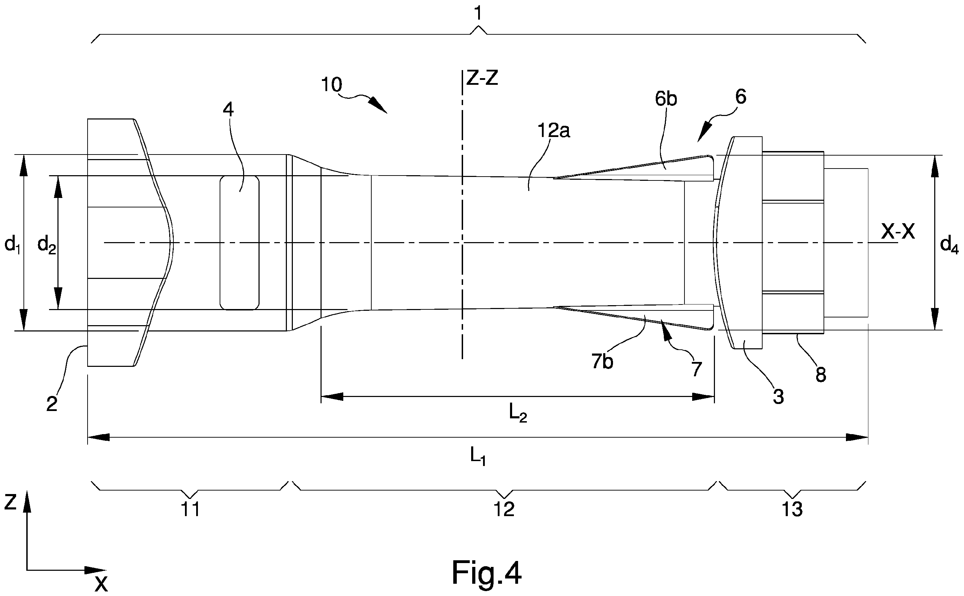

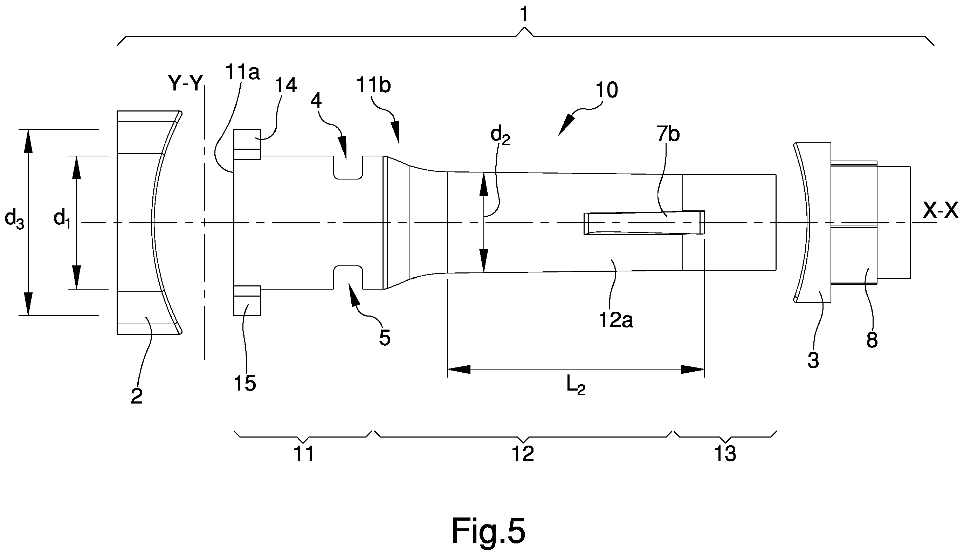

As shown in the example in Figure 4 and 5, the second saddle 3 of the valve 1 is substantially similar to the first saddle 2. Preferably, the second saddle 3 differs from the first saddle 2 in size and absence of cavities.

According to the example shown in Figure 7, the final extremity 11a of the head portion 11 of the lance 10 ends with a circular end surface 11d and comprises two insertion fins 14,15 arranged diametrically opposite each other overhanging from the external lateral surface 11c of the head portion 11.

As mentioned above, the insertion fins 14,15 are intended to couple by shape to the seats 22,23 of the saddle 2. In particular, the seats 22,23 serve as a support for the insertion fins 14,15. More specifically, after the coupling of the lance 10 to the saddle 2, the insertion fins 14,15 lie in the seats 22,23.

In particular, each insertion fin 14,15 has an element overhanging from the lateral surface 11c of the head portion 11 by a section of predetermined length so that the total transverse extension d₃ of the insertion fins 14,15 is larger than the external diameter d₁ of the head portion 11 of the lance 10.

As shown in the example in Figure 7, each insertion fin 14,15 comprises an upper surface 14a,15a and a lower surface 14b,15b.

Preferably, the upper surfaces 14a,15a and the circular end surface 11d of the lance 10 are arranged on the same plane.

The insertion fins 14,15 are preferably cube-shaped and of predefined size for fixing the saddle 2 to the lance 10.

Preferably, the insertion fins 14,15 are positioned at a distance ranging from 0% to 10% of the total length L₁ of the main body 10 starting from the final extremity 11a of the head portion 11.

Again with reference to the examples shown in Figures 4, 5 and 7, on the lateral surface 11c of the head portion 11 there are two slots 4,5 that allow the flow of compressed air from the tank S to the inside of the lance 10. In particular, the slots 4,5 are positioned diametrically opposite along the lateral surface 11c of the head portion 11 and arranged below the insertion fins 14,15 between the final extremity 11a and the central portion 12. Each of the slots 4,5 is obtained by making a transverse cut of predetermined depth on the lateral surface of the head portion 11.

Preferably, the slots 4,5 are positioned at a distance ranging from 20% to 40% of the total length L₁ of the main body 10 starting from the final extremity 11a of the head portion 11.

Preferably, the head portion 11 of the lance 10 has a diameter d₁ which is substantially constant up to the connecting member 11b, the latter decreasing in diameter progressively towards the end portion 13. In particular, the head portion 11 has the diameter d₁ larger than the diameter d₂ of the central portion 12. Even more specifically, the connecting member 11b has a substantially conical shape which is tapered towards its own axis X-X.

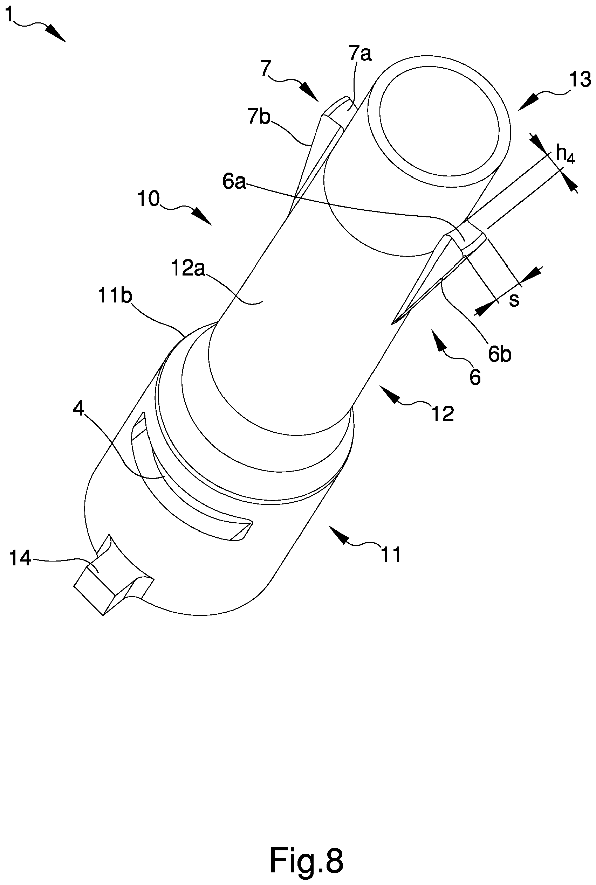

With reference to the examples shown in Figures 4, 5 and 8, advantageously, there are two locking fins 6,7 on the external lateral surface 12a of the lance 10.

Preferably, each of the locking fins 6,7 is substantially in the shape of a rectangular prism in which an oblique surface 6b,7b and a stop surface 6a,7a are identified. In particular, the base of each locking fin 6,7 extends parallel to the direction X-X and is fixed to the external lateral surface 12a of the central portion 12. Preferably, each of the locking fins 6,7 has a thickness s of predefined length of approximately 10 mm.

The stop surfaces 6a,7a have a substantially rectangular shape and are arranged on the same plane transverse to the direction X-X. In particular, the locking fins 6,7 have a height h₄ ranging from 5 mm to 20 mm.

The stop surfaces 6a,7a actually correspond to the end section of the locking fins 6,7 and are arranged in the proximity of the end portion 13 of the main body 10. Preferably, the locking fins 6,7 are positioned at a distance ranging from 70% to 80% of the total length L₁ of the main body 10 starting from the final extremity 11a of the head portion 11.

The oblique surfaces 6b,7b of the locking fins 6,7 are rectangular in shape and extend from the stop surface 6a,7a towards the external lateral surface 12a of the lance 10. In particular, the oblique surface 6b,7b is inclined towards the external lateral surface 12a and towards the head portion 11.

Preferably, each locking fin 6,7 extends from the lateral surface 12a up to a maximum height h₄ of 20 mm so that the total transverse extension d₄ of both the locking fins 6,7 has a maximum size substantially equal to d₂ + 2h₄.

Preferably, the locking fins 6,7 are positioned diametrically opposite on the external lateral surface 12a of the central portion 12.

According to a preferred shape, the valve 1 comprises a piston (not shown) which serves to adjust the air flow entering the lance 10 from the tank S through the slots 4,5. In particular, the piston slides axially and internally to the lance 10 and its movement is usually adjusted by the action of a solenoid valve. Preferably, the piston is movable between a closure position and an opening position.

In the opening position, the piston is approaching the slots 4,5 of the lance 10 so that the slots 4,5 are completely closed and the air intake inside the lance 10 is blocked.

In the opening position the piston is moving away from the slots 4,5 of the lance 10 so that air is free to enter the lance 10.

With reference to the examples shown in Figures 2 and 3, the tank S has preferably a circular cross-section with a diameter of predetermined length dₛ.

On the surface of the tank S there are also a first hole 16 and a second hole 17 of substantially circular shape to allow the entry and exit of the lance 10 from the tank S, respectively. The diameters of the two holes 16,17 are shown in Figure 3 with d₁₆ and d₁₇ respectively. Preferably, the holes 16,17 are drilled on the surface of the tank S and arranged diametrically opposite.

The diameter dₛ of the tank S is shorter than the length L₁ of the valve 1 so that, when the valve 1 is mounted on the tank S, part of the head portion 11 and part of the end portion 13 come out of the tank Sat the holes 16,17, respectively. Preferably, the length L₂ of the central portion 12 is shorter than the diameter dₛ of the tank S.

In order to allow the valve 1 to be mounted in the tank S, and thus to be inserted therein, the diameter d₁₆ of the first hole 16 must be large enough to allow the locking fins 6,7 to pass through. Substantially, the diameter d₁₆ of the first hole 16 is larger than the total transverse extension d₄ of both the locking fins 6,7. Additionally, to block the movement of the lance 10 to a position where the latter is substantially centered inside the tank S, the diameter d₁₆ of the first hole 16 of the tank S is smaller than the total transverse extension d₃ of both the insertion fins 14,15.

Therefore, in order to achieve a fine centering of the lance 10 with respect to the tank S and thus allow the end portion 13 of the lance 10 to pass over the second hole 17 by a section of predetermined length, the diameter d₁₇ of the latter is larger than the end portion 13 of the lance 10 but smaller than the total transverse extension d₄ of both the locking fins 6,7.

Summarizing the above, the assembly of the valve 1 to the tank S is substantially composed of three main phases:
- coupling phase between the saddle 2 and the lance 10,
- insertion phase of the lance 10 into the tank S,
- locking phase of the lance 10.

In the coupling phase, the lance 10 is inserted in the saddle 2. In particular, just before insertion, the extremity surface of the end portion 13 of the lance 10 faces the upper surface 21c of the saddle 2, so that the first part inserted in the hole 20 of the saddle 2 is the end portion 13 of the lance 10.

The insertion continues until the circular surface 11d and the upper surface 21c, of the lance 10 and of the saddle 2 respectively, are aligned with each other.

During the insertion phase of the lance 10 into the tank S, the lance 10 is partly inserted into the tank S through the first hole 16. In particular, the end portion 13 of the lance 10 is the first part of the lance 10 to be inserted into the tank S through the first hole 16.

The insertion phase continues until the lance 10 is centered with respect to the tank S with the end portion 13 of the lance 10 approaching the second hole 17. In particular, the approach of the end portion 13 of the lance 10 to the second hole 17 occurs at the same time as the approach, from the outside of the tank S, of the head portion 11 of the lance 10, coupled to the saddle 2, to the hole 16 of the tank S.

Subsequently, the end portion 13 of the lance 10 partly comes out of the tank S through the second hole 17. In particular, the exit of the end portion 13 of the lance 10 from the hole 17 ends when the saddle 2 comes into contact with the external surface of the tank S.

When the insertion phase has been completed, the lance 10 is centered in the tank S with the saddle 2 and part of the head portion 11 of the lance 10 positioned outside the tank S, the central portion 12 fully inserted in the tank S, and part of the end portion 13 positioned outside the tank S.

The locking phase requires the second saddle 3 to be fitted in the end portion 13 and then the ring nut 8 to be screwed to the end portion 13 of the lance 10.

As mentioned above, in relation to the technical problem of the present invention, the deformation of the tank S is generally caused by the excessive screwing of the lance into the valve body. In this case, thanks to the presence of the locking fins 6,7, the operator in charge of the last phase of insertion of the lance 10 into the tank S tightens the ring nut 8 until the thrust exerted by the second saddle 3 on the tank S depending on the screwing of the ring nut 8 ends when the internal surface of the tank S around the second hole 17 is blocked on the stop surfaces 6a,7a of the locking fins 6,7.

As can be seen from the present description, it has been ascertained that the described invention achieves the intended objects and in particular it is underlined that, through the valve device, it is possible to avoid the presence of rods to limit the deformation of the tanks S and therefore to obtain an embodiment with short and economic production times.

## Claims

1. Valve device (1) suitable for cleaning industrial filters and suitable for being coupled to a compressed air tank (S), comprising:
a diaphragm type main body (10) extending between a head portion (11) and an end portion (13) and intended to be fitted into said tank (S) to pass through it at least partly by means of two holes (16,17) formed on it,
wherein between said head portion (11) and said end portion (13) is formed a central portion (12) intended, in use, to remain in the internal position of the tank (S) when said main body (10) is inserted at least partly in said tank (S),
wherein said head portion (11) and end portion (13) are located at least partly outside said tank (S) when said main body (10) is fitted and centered in said tank (S), and
wherein the head portion (11) of the main body (10) extends between a final extremity (11a) and a connecting member (11b),
**characterized by** the fact that:
in said head portion (11) is formed at least one slot (4,5) positioned at a distance ranging from 20% to 40% of the total length (L₁) of the main body (10) starting from the final extremity (11a) of said head portion (11) and adapted to allow the passage of the compressed air from the tank (S) to the inside of the main body (10), and
said central body (12) comprises locking means (6,7) located in the proximity of the end portion (13) and, in use, inside the tank (S) in order to block the movement of the main body (10) up to a position wherein said central portion (12) is substantially centered inside the tank (S) during the coupling of said central body (12) to said tank (S),
wherein said locking means (6,7)
are positioned at a distance ranging from 70% to 80% of the total length (L₁) of the main body (10) starting from the extremity (11a) of said head portion (11) towards said end portion (13),
overhang from the external surface (12a) of the central portion (12), and
are substantially in the shape of a rectangular prism and comprise a stop surface (6a,7a) corresponding to the ending part of said locking means (6,7),
and by the fact that it comprises:
a first saddle (2) provided with a through hole (20) and intended to receive by shape coupling the extremity (11a) of the head portion (11), wherein said saddle (2) is also intended, in use, to remain in an external position of said tank (S), and a second saddle (3) and a ring nut (8) adapted to fit and screw on the end portion (13) respectively, wherein said second saddle (3) is also intended, in use, to remain in the external position of said tank (S) and wherein said locking means (6,7) prevent the internal surface of the tank (S) from being deformed during the screwing of said ring nut (8) on said end portion (13).

2. Valve device (1) according to claim 1, wherein said locking means (6,7) are at least two in number and arranged diametrically opposite with respect to said main body (10).

3. Valve device (1) according to any of the preceding claims, comprising at least one insertion fin (14,15) positioned at a distance ranging from 0% to 10% of the total length (L₁) of the main body (10) starting from the final extremity (11a) of said head portion (11), said at least one insertion fin (14,15) being adapted to couple to said saddle (2) to make the latter adhere to the external surface of the tank (S).

## Patentansprüche

1. Ventilvorrichtung (1), die zur Reinigung von Industriefiltern und zur Kopplung an einen Druckluftbehälter (S) geeignet ist, umfassend:
einen membranartigen Hauptkörper (10), der sich zwischen einem Kopfabschnitt (11) und einem Endabschnitt (13) erstreckt und der zum Einsetzen in den Behälter (S) vorgesehen ist, um diesen zumindest teilweise mittels zweier an ihm ausgebildeter Löcher (16, 17) zu durchdringen,
wobei zwischen dem Kopfabschnitt (11) und dem Endabschnitt (13) ein mittlerer Abschnitt (12) ausgebildet ist, der dazu vorgesehen ist, im Gebrauch in der inneren Position des Behälters (S) zu verbleiben, wenn der Hauptkörper (10) zumindest teilweise in den Behälter (S) eingesetzt ist,
wobei der Kopfabschnitt (11) und der Endabschnitt (13) zumindest teilweise außerhalb des Behälters (S) angeordnet sind, wenn der Hauptkörper (10) in dem Behälter (S) angeordnet und zentriert ist, und
wobei sich der Kopfabschnitt (11) des Hauptkörpers (10) zwischen einem äußeren Endbereich (11a) und einem Verbindungselement (11b) erstreckt,
**dadurch gekennzeichnet, dass**
in dem Kopfabschnitt (11) mindestens ein Schlitz (4, 5) ausgebildet ist, der in einem Abstand im Bereich von 20% bis 40% der Gesamtlänge (L1) des Hauptkörpers (10), ausgehend von dem äußeren Endbereich (11a) des Kopfabschnitts (11), angeordnet und ausgebildet ist, den Durchfluss der Druckluft aus dem Behälter (S) in das Innere des Hauptkörpers (10) zu ermöglichen, und
der mittlere Abschnitt (12) Verriegelungsmittel (6, 7) umfasst, die in der Nähe des Endabschnitts (13) und im Gebrauch innerhalb des Behälters (S) angeordnet sind, um die Bewegung des Hauptkörpers (10) bis zu einer Position zu blockieren, in der der mittlere Abschnitt (12) innerhalb des Behälters (S) während der Kopplung des mittleren Abschnitts (12) mit dem Behälter (S) im Wesentlichen zentriert ist, wobei die Verriegelungsmittel (6, 7) in einem Abstand im Bereich von 70% bis 80% der Gesamtlänge (L₁) des Hauptkörpers (10), ausgehend von dem äußeren Endbereich (11a) des Kopfabschnitts (11) in Richtung des Endabschnitts (13), angeordnet sind, von der Außenfläche (12a) des mittleren Abschnitts (12) überstehen und
im Wesentlichen die Form eines rechteckigen Prismas haben und eine Anschlagfläche (6a, 7a) aufweisen, die dem Endabschnitt der Verriegelungsmittel (6, 7) entspricht,
und dadurch, dass sie umfasst:
einen ersten Sattel (2), der mit einem Durchgangsloch (20) versehen und dazu vorgesehen ist, durch Formschluss den äußeren Endbereich (11a) des Kopfabschnitts (11) aufzunehmen, wobei der Sattel (2) auch dazu vorgesehen ist, im Gebrauch in einer äußeren Position des Behälters (S) zu verbleiben, und einen zweiten Sattel (3) und eine Ringmutter (8), die ausgebildet ist, auf den Endabschnitt (13) aufgesetzt bzw. aufgeschraubt zu werden, wobei der zweite Sattel (3) auch dazu vorgesehen ist, im Gebrauch in der äußeren Position des Behälters (S) zu verbleiben, und wobei die Verriegelungsmittel (6, 7) verhindern, dass die Innenfläche des Behälters (S) während des Aufschraubens der Ringmutter (8) auf den Endabschnitt (13) verformt wird.

2. Ventilvorrichtung (1) nach Anspruch 1, wobei die Verriegelungsmittel (6, 7) mindestens zwei an der Zahl sind und in Bezug auf den Hauptkörper (10) diametral gegenüberliegend angeordnet sind.

3. Ventilvorrichtung (1) nach einem der vorhergehenden Ansprüche, umfassend mindestens eine Einführungsrippe (14, 15), die in einem Abstand im Bereich von 0% bis 10% der Gesamtlänge (L₁) des Hauptkörpers (10), ausgehend von dem äußeren Endbereich (11a) des Kopfabschnitts (11), angeordnet ist, wobei die mindestens eine Einführungsrippe (14, 15) ausgebildet ist, mit dem Sattel (2) zu koppeln, um letzteren an der Außenfläche des Behälters (S) anliegen zu lassen.

## Revendications

1. - Dispositif de vanne (1) approprié pour nettoyer des filtres industriels et approprié pour être couplé à un réservoir d'air comprimé (S), comprenant :
un corps principal de type membrane (10) s'étendant entre une partie tête (11) et une partie d'extrémité (13) et destiné à être monté dans ledit réservoir (S) pour le traverser au moins en partie au moyen de deux trous (16, 17) formés sur celui-ci,
entre ladite partie tête (11) et ladite partie d'extrémité (13) étant formée une partie centrale (12) destinée, en utilisation, à rester dans la position interne du réservoir (S) lorsque ledit corps principal (10) est introduit au moins en partie dans ledit réservoir (S),
ladite partie tête (11) et ladite partie d'extrémité (13) étant situées au moins en partie à l'extérieur dudit réservoir (S) lorsque ledit corps principal (10) est monté et centré dans ledit réservoir (S), et
la partie tête (11) du corps principal (10) s'étendant entre une extrémité finale (11a) et un élément de liaison (11b),
**caractérisé par le fait que** :
dans ladite partie tête (11) est formée au moins une fente (4, 5) positionnée à une distance située dans la plage allant de 20% à 40% de la longueur totale (L₁) du corps principal (10) à partir de l'extrémité finale (11a) de ladite partie tête (11) et agencée pour permettre le passage de l'air comprimé du réservoir (S) vers l'intérieur du corps principal (10), et
ledit corps central (12) comprend des moyens de verrouillage (6, 7) situés à proximité de la partie d'extrémité (13) et, en utilisation, à l'intérieur du réservoir (S) afin de bloquer le mouvement du corps principal (10) jusqu'à une position dans laquelle ladite partie centrale (12) est sensiblement centrée à l'intérieur du réservoir (S) pendant le couplage dudit corps central (12) audit réservoir (S),
lesdits moyens de verrouillage (6, 7)
étant positionnés à une distance située dans la plage allant de 70% à 80% de la longueur totale (L₁) du corps principal (10) à partir de l'extrémité (11a) de ladite partie tête (11) vers ladite partie d'extrémité (13),
dépassant de la surface externe (12a) de la partie centrale (12), et
ayant sensiblement la forme d'un prisme rectangulaire et comprenant une surface d'arrêt (6a, 7a) correspondant à la partie terminale desdits moyens de verrouillage (6, 7),
et **par le fait qu'**il comprend :
une première sellette (2) comportant un trou traversant (20) et destinée à recevoir, par couplage de forme, l'extrémité (11a) de la partie tête (11), ladite sellette (2) étant également destinée, en utilisation, à rester dans une position externe dudit réservoir (S), et
une seconde sellette (3) et un écrou à anneau (8) agencés pour s'adapter et se visser sur la partie d'extrémité (13), respectivement, ladite seconde sellette (3) étant également destinée, en utilisation, à rester dans la position externe dudit réservoir (S) et lesdits moyens de verrouillage (6, 7) empêchant la surface interne du réservoir (S) d'être déformée pendant le vissage dudit écrou à anneau (8) sur ladite partie d'extrémité (13).

2. - Dispositif de vanne (1) selon la revendication 1, dans lequel lesdits moyens de verrouillage (6, 7) sont au moins au nombre de deux et disposés diamétralement opposés par rapport audit corps principal (10) .

3. - Dispositif de vanne (1) selon l'une quelconque des revendications précédentes, comprenant au moins un aileron d'introduction (14,15) positionné à une distance située dans la plage allant de 0% à 10% de la longueur totale (L₁) du corps principal (10) à partir de l'extrémité finale (11a) de ladite partie tête (11), ledit au moins un aileron d'introduction (14,15) étant agencé pour se coupler à ladite selle (2) pour faire adhérer cette dernière à la surface externe du réservoir (S).
